# EUROPÄISCHE PATENTSCHRIFT

(11) **EP 1 536 985 B1**
(45) Veröffentlichungstag und Bekanntmachung des Hinweises auf die Patenterteilung: **10.05.2006**
(21) Anmeldenummer: 02764534.0
(22) Anmeldetag: 30.07.2002
(51) Int. Cl.: B60R 21/01

(54) **VERFAHREN UND VORRICHTUNG ZUM ERKENNEN EINES SEITENAUFPRALLS AN EINEM KRAFTFAHRZEUG**
METHOD AND DEVICE FOR RECOGNITION OF A SIDE IMPACT ON A MOTOR VEHICLE
PROCEDE ET DISPOSITIF POUR IDENTIFIER UN IMPACT LATERAL SUR UNE AUTOMOBILE

(30) Priorität: 29.08.2001 DE 10142173
(43) Veröffentlichungstag der Anmeldung: 08.06.2005
(73) Patentinhaber: ROBERT BOSCH GMBH, 70442 Stuttgart (DE)
(72) Erfinder: KOCHER, Pascal, F-67530 Ottrott (FR); SIMON, Isolde, 72127 Kusterdingen (DE); Arndt, Michael, 72762 Reutlingen (DE); RECKNAGEL, Rolf-Juergen, 07747 Jena (DE); AIDAM, Rolf, 76744 Woerth (DE)
(86) Internationale Anmeldenummer: PCT/DE2002/002792
(87) Internationale Veröffentlichungsnummer: WO 2003/026932

(56) Entgegenhaltungen:
- WO-A-02/40321
- WO-A-95/11455
- GB-A- 2 292 807
- US-A- 5 748 075

## Beschreibung

Die Erfindung betrifft ein Verfahren und eine Vorrichtung zum Erkennen eines Seitenaufpralls an einem Kraftfahrzeug.

Die Erkennung eines Seitenaufpralls an einem Kraftfahrzeug im Bereich des Fahrgastraumes ist insbesondere für die Auslösung von Seitenairbags wichtig. Hierfür sind verschiedene Systeme bekannt. Zum einen werden Beschleunigungssensoren an den Türen angebracht, die direkt die bei der Verformung der Tür auftretende Beschleunigung messen. Zum anderen sind Vorrichtungen und Verfahren bekannt, bei denen ein Drucksensor in einem abgeschlossenen Luftvolumen in dem Türinnenraum angebracht ist und die bei einem Seitenaufprall bewirkte Verringerung des Luftvolumens als Druckerhöhung mißt. Das Druckmesssignal des Drucksensors wird von einer Auswerteeinrichtung insbesondere daraufhin überprüft, ob eine hinreichend schnelle Druckerhöhung vorliegt, die als Seitenaufprall erkannt wird.

Die erfindungsgemäße Vorrichtung mit den Merkmalen des Anspruchs 1 sowie das erfindungsgemäße Verfahren mit den Merkmalen des Anspruchs 11 bieten demgegenüber insbesondere den Vorteil, daß eine sichere und schnelle Erkennung eines Seitenaufpralls gewährleistet ist und dennoch ein Selbsttest der Vorrichtung bzw. des Verfahrens zur Sicherstellung der Funktionsfähigkeit möglich ist.

Das Dokument WO 9511455A beschreibt eine Vorrichtung zum Erkennen eines Seitenaufpralls an einem Kraftfahrzeug, mit
einem in einem abgeschlossenen Luftvolumen eines Türinnenraums vorgesehenen Drucksensor,
einer in dem abgeschlossenen Luftvolumen vorgesehenen Heizeinrichtung, und
einer Meßeinrichtung zur Aufnahme und Konditionierung
eines Meßsignals des Drucksensors und Ausgabe eines Drucksignals,
einem Heizgenerator zum Ansteuern der Heizeinrichtung , und
einer Auswerte- und Steuereinrichtung zur Aufnahme des Drucksignals der Meßeinrichtung und Ansteuerung des Heizgenerators .

Der Gegenstand des Anspruch 1 unterscheidet Side von der lelire des Dokuments WO95 11455 A dadurch, dass der Sensor ein Temperatursensor ist.

Das Dokument WO9511455A beschreibt weiter ein Verfahren zum Erkennen eines Seitenaufpralls an einem Fahrzeug, bei dem
in einem abgeschlossenen Luftvolumen eines Türinnenraums eine Luftdruck mittels eines luftdrucksensors gemessen wird und auf Grundlage der gemessenen Luftdruck entschieden wird, ob ein Seitenaufprall vorliegt,
wobei zumindest zeitweise ein Funktionstest durchgeführt wird, bei dem das Luftvolumen erhitzt wird und aus einem Meßsignal des Luftdrucksensors entschieden wird, ob der Luftdrucksensor funktionsfähig ist.

Der Gegenstand des Anspruchs 11 unterscheidet sich von der Lehre des Dokuments WO9511455A dadurch, dass eine Temperatur gemessen wird, worauf entschieden wird, ob ein Seitenaufprall vorliegt. Werter wird ein Funktionstest durchgeführt, bei dem das luftvolumen und/oder der Temperatursensor erhitzt wird.

Erfindungsgemäß wird somit die bei einem Seitenaufprall durch die Verringerung des Luftvolumens des Türinnenraums bewirkte Temperaturerhöhung gemessen. Da bei einem Seitenaufprall eine plötzliche und somit nahezu adiabatische Kompression der Luft des Luftvolumens auftritt, bei der die von der Luft an die Tür abgegebene Wärmeenergie praktisch vernachlässigbar ist, ist eine zuverlässige Seitenaufprallerkennung möglich. Diese bei einem Seitenaufprall auftretende Temperaturerhöhung kann hierbei - anders als bei Beschleunigungsmeßverfahren und Druckmeßverfahren - mit relativ geringem Aufwand und dennoch zuverlässig in einem Selbsttest simuliert werden, indem über eine Heizeinrichtung eine Temperaturerhöhung zumindest im Bereich des Temperatursensors bewirkt wird. Ein derartiger Selbsttest ist vorteilhafterweise jederzeit und ohne Beeinträchtigung der Funktionsfähigkeit und Lebensdauer des Temperatursensors möglich.

Das Messsignal des Temperatursensors wird von einer Meßeinrichtung aufgenommen, die - gegebenenfalls nach einer Signalkonditionierung - ein Temperatursignal an eine Steuer- und Auswerteeinheit weitergibt. Die Steuer- und Auswerteeinheit gibt wiederum für die Durchführung eines Selbsttestes Steuersignale an einen Heizgenerator, der die Heizeinrichtung ansteuert. Somit können der Heizvorgang und die Temperaturmessung koordiniert werden, wobei insbesondere ein zeitliches Verhalten und/oder eine Heizintensität verändert und eine Höhe und das zeitliche Verhalten des Meßsignals, insbesondere auch eine zeitliche Verzögerung gegenüber dem Heizvorgang und eine Flankensteilheit, ausgewertet werden können. Hierbei kann zum Beispiel die Steilheit und Verzögerung des Meßsignals bei einer durch einen Rechteckimpuls erzeugten plötzlichen Temperaturerhöhung erfaßt werden.

Die Temperaturmessung kann durch unterschiedliche Temperatursensoren erfolgen. Hierbei sind insbesondere resistive Messungen mittels eines Widerstandselementes aus einem Material möglich, dessen Widerstand einen hohen Temperaturkoeffizienten aufweist. Um eine schnelle Reaktion des Widerstandselementes auf eine Temperaturerhöhung der umgebenden Luft zu ermöglichen, ist seine dem Luftvolumen ausgesetzte Oberfläche vorteilhafterweise im Verhältnis zu seiner Schichtdicke groß ausgebildet. Somit können insbesondere dünne auf einem Substrat aufgetragene Schichten verwendet werden. Hierbei ist eine thermische Isolierung zumindest eines größeren Bereiches des Messwiderstandes bezüglich seiner Befestigungspunkte zur Erhöhung der Meßgenauigkeit und für ein schnelleres Reaktionsverhalten vorteilhaft. Dies kann insbesondere durch Ausbildung mäanderartiger Schichten bzw. Bahnen auf einem als thermisch isolierende Membran ausgebildeten dünnen Bereich eines Subtrates erreicht werden.

Die Zufuhr von Wärmeenergie über die Heizeinrichtung zu dem Temperatursensor kann auf unterschiedliche Weise erfolgen, z.B. durch Wärmeleitung, Konvektion oder Wärmestrahlung. Für eine hohe Genauigkeit des Selbsttestes auf Funktionsfähigkeit ist eine schnelle Temperaturerhöhung im Bereich des Temperatursensors vorteilhaft.

Bei Erhitzung durch Wärmeleitung ist die Heizeinrichtung auf dem Substrat vorgesehen, auf dem auch der Temperatursensor aufgebracht ist. Eine schnelle Temperaturerhöhung wird hierbei insbesondere erreicht, indem die Heizeinrichtung in unmittelbarer Nähe zu dem Temperatursensor auf der Membran vorgesehen ist, zum Beispiel als zu der Meßwiderstandsschicht parallele Heizwiderstandsschicht. Eine derartige gleichartige, symmetrische oder zumindest ähnliche Ausbildung der Meßwiderstandsschicht und Heizwiderstandsschicht ermöglicht zudem ein wahlweises Umschalten zwischen den Widerstandsschichten, so daß eine Erhöhung des Selbsttest-Sicherheit erreicht wird. Weiterhin kann grundsätzlich bei Ausfall der Temperaturwiderstandsschicht die Heizwiderstandsschicht als Temperatursensor verwendet werden.

Die Zuführung von Wärmeenergie über Wärmeleitung des Substrats kann auch durch eine außerhalb der Membran vorgesehene Heizwiderstandsschicht erfolgen, wodurch eine kostengünstigere Ausbildung möglich ist. In beiden Fällen kann die Verbindung der Heizeinrichtung mit dem Heizgenerator und des Temperatursensors mit der Meßeinrichtung über entsprechende Anschlußkontakte bzw. Bondpads auf dem Chip ermöglicht werden, wodurch ein einfacher Austausch einer fehlerhaften Vorrichtung durch Auswechseln dieses Chips möglich ist.

Weiterhin kann die Zuführung von Wärmeenergie mittels Konvektion erfolgen, indem die Heizeinrichtung zum Beispiel als Heizwiderstand unterhalb des Temperatursensors Luft erwärmt, die an dem Temperatursensor entlangströmt. Eine Wärmezufuhr über Wärmestrahlung kann z.B. über eine auf den Temperatursensor gerichtete IR-Leuchtdiode erfolgen.

Eine Beeinträchtigung der Funktionsfähigkeit durch Verschmutzungen oder Beläge auf dem Temperatursensor kann als zeitliche Verzögerung und geringere Meßtemperatur erkannt werden. Hierzu kann insbesondere eine pulsartige Beheizung über die Heizeinrichtung durchgeführt werden und somit das dynamische Verhalten des Temperatursensors überprüft werden.

Die Erfindung wird im folgenden anhand der beiliegenden Zeichnungen an einigen Ausführungsformen erläutert. Es zeigen:
- Fig. 1: eine Draufsicht auf einen Chip mit integriertem Temperatursensor und Heizeinrichtung gemäß einer Ausführungsform der Erfindung;
- Fig. 2: einen Querschnitt durch den Chip von Fig.1;
- Fig. 3: eine Draufsicht auf einen Chip gemäß einer weiteren Ausführungsform der Erfindung;
- Fig. 4: eine Seitenaufprallerkennungsvorrichtung mit der Schaltung von Fig. 1 gemäß einer Ausführungsform der Erfindung;
- Fig. 5: eine Seitenaufprallerkennungsvorrichtung mit der Schaltung von Fig. 1 gemäß einer weiteren Ausführungsform der Erfindung;
- Fig. 6: eine Schnittdarstellung einer Anordnung eines Temperatursensors und einer Heizeinrichtung einer Seitenaufprallerkennungsvorrichtung gemäß einer weiteren Ausführungsform der Erfindung;
- Fig. 7: eine Schnittdarstellung einer Anordnung eines Temperatursensors und einer Heizeinrichtung einer Seitenaufprallerkennungsvorrichtung gemäß einer weiteren Ausführungsform der Erfindung.

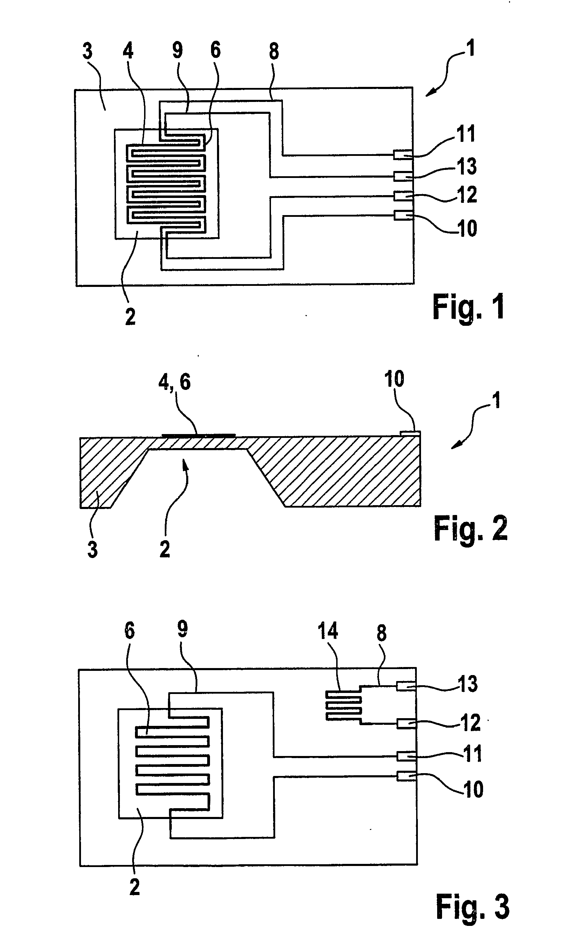

Gemäß Fig. 1, Fig. 2 weist eine Meßvorrichtung 1 ein Substrat 3 aus z.B. Silizium auf, in dem durch eine geätzte Vertiefung an der Unterseite eine Membran 2 als dünner Bereich ausgebildet ist. Auf der Membran 2 sind eine mäanderartige Heizwiderstandsschicht 4 und eine mäanderartige Temperaturwiderstandsschicht 6 vorgesehen, die zur effektiven Nutzung des Flächenbereichs der Membran 2 ineinandergeschachtelt sind. Die Temperaturwiderstandsschicht 6 und die Heizwiderstandsschicht 4 bestehen jeweils aus einer dünnen Metallschicht oder Halbleiterschicht, die auf einer nicht gezeigten Isolatorschicht auf dem Substrat 3 und der Membran 2 aufgebracht sind. Außerhalb der Membran 2 sind diese Schichten - gegebenenfalls mit einer veränderten Dicke und Breite - als Zuführleitungen 8, 9 zu Anschlußkontakten bzw. Bondpads 10, 11, 12, 13 ausgebildet. Hierbei kann eine Temperaturänderung als Änderung des Widerstandes zwischen den Anschlußkontakten 10, 11 erfaßt werden und Wärmeenergie über die Heizwiderstandsschicht 6 durch Anlegen einer Stromquelle oder Spannungsquelle an die Anschlußkontakte 12 und 13 zugeführt werden.

Bei der Ausführungsform der Fig. 3 ist die Temperaturwiderstandsschicht 6 ebenfalls auf der Membran 2 ausgebildet und über Zuführleitungen 9 mit Anschlußkontakten 10, 11 am Rande des Chips verbunden. Die erfindungsgemäße Heizeinrichtung wird hierbei jedoch durch eine Heizwiderstandsschicht 14 gebildet, die auf einer Isolatorschicht auf dem Substrat 3 außerhalb der Membran 2 vorgesehen, ebenfalls mäanderartig ausgebildet und über Zuführleitungen 8 mit Anschlußkontakten 12 und 13 verbunden ist. Die Herstellungskosten dieser Meßvorrichtung sind gegenüber derjenigen der Fig. 1, Fig. 2 verringert; die Wärmeleitung über das dickere Substrat 3 sowie die Membran 2 zu der Temperaturwiderstandsschicht 6 ist jedoch zeitlich etwas verzögert, so dass die von der Temperaturwiderstandsschicht 6 ermittelte Temperaturerhöhung aufgrund der Trägheit des dickeren Substrates 3 eine geringere Signalsteilheit besitzt und etwas verzögert ist.

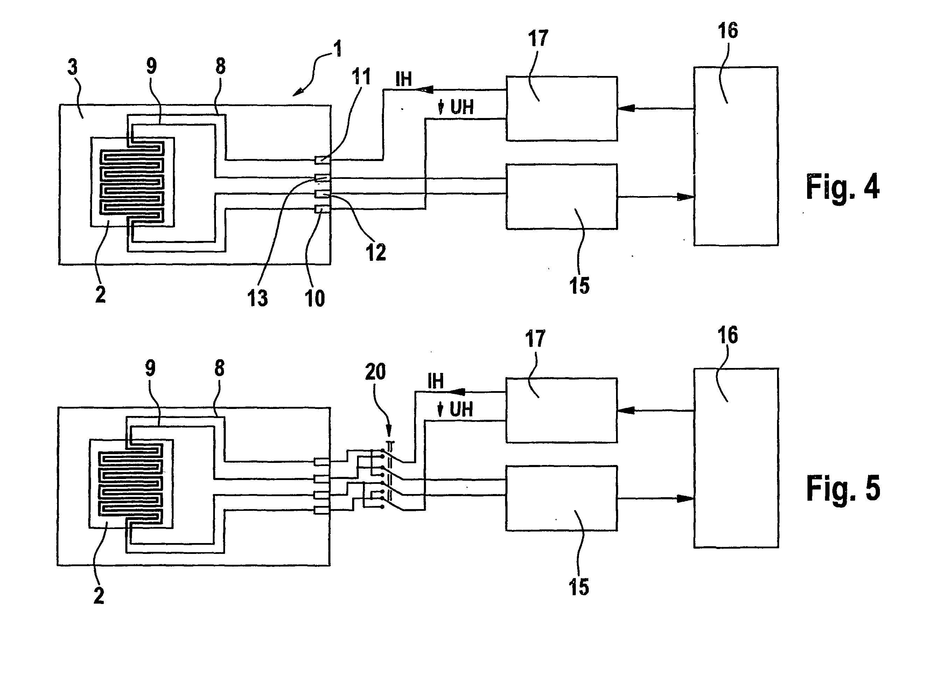

Die Ansteuerung und Auswertung der Meßvorrichtung 1 der Fig. 1 und 3 kann zum Beispiel mittels der in Fig. 4 oder Fig. 5 gezeigten äußeren Beschaltung erfolgen. Gemäß Fig. 4 erfolgt eine Temperaturmessung regelmäßig über eine Meßeinrichtung 15, die den elektrischen Widerstand zwischen den Anschlußkontakten 12 und 13 als Spannungsabfall erfaßt und durch eine Signalkonditionierung ein Temperatursignal an eine Steuer- und Auswerteeinrichtung 16 ausgibt. In der Steuer- und Auswerteeinrichtung 16 wird aufgrund der Höhe der gemessenen Temperatur und insbesondere des zeitlichen Verhaltens des Temperatursignals, zum Beispiel durch Bildung einer zeitlichen Ableitung des Temperaturmeßsignals und Vergleichen mit vorgegebenen Referenz- und Schwellenwerten ermittelt, ob aufgrund einer schnellen, hinreichend großen Erhöhung der gemessenen Temperatur ein Seitenaufprall vorliegt, woraufhin ein entsprechendes Steuersignal zum Beispiel an einen Seitenairbag oder einen Datenbus des Kraftfahrzeuges ausgegeben wird.

Zur Durchführung eines Selbsttestes - zum Beispiel beim Start des Kraftfahrzeuges oder in regelmäßigen Zeitabständen - wird von der Steuer- und Auswerteeinrichtung 16 ein Steuersignal an einen Heizgenerator 17 ausgegeben, der eine Strom- oder Spannungsquelle aufweist, die mit den Anschlußkontakten 10 und 11 der Heizwiderstandsschicht 4 verbunden ist. Entsprechend der angelegten Spannung UH bzw. des durch die Heizwiderstandsschicht 4 fließenden Stromes IH wird eine Temperaturerhöhung der Membran 2 bewirkt und ein geänderter Widerstandsmeßwert von der Meßeinrichtung 15 an den Anschlußkontakten 12, 13 abgegriffen. Die Steuer- und Auswerteeinrichtung 16 ermittelt hierbei den Unterschied in der Höhe des Temperatursignals, die zeitliche Verzögerung zwischen der Ausgabe des Steuersignals an den Heizgenerator 17 und der Änderung des Temperatursignals und die Steilheit des Temperatursignals. Anschließend wird ein Selbsttest-Signal zum Beispiel an einen Datenbus des Kraftfahrzeuges ausgegeben, der die Funktionsfähigkeit der Meßvorrichtung 1 anzeigt; alternativ hierzu kann auch lediglich bei festgestellter Fehlerhaftigkeit ein entsprechendes Fehlersignal ausgegeben werden.

Der Aufbau der Fig. 5 entspricht zunächst demjenigen der Fig. 4, wobei über eine Schaltungseinrichtung 20 die Anschlüsse der Meßeinrichtung 15 und des Heizgenerators 17 wahlweise mit den Anschlußkontakten 10, 11 oder 12, 13 verbunden werden können, so daß eine Schaltungsumkehr gegenüber Fig. 4 möglich ist, bei der die Temperaturwiderstandsschicht 6 als Heizeinrichtung und die Heizwiderstandsschicht 4 als Temperatursensor dient. Eine derartige Umschaltung kann insbesondere für den Selbsttest durchgeführt werden, indem durch eine kurzzeitige Schaltungsumkehr die Genauigkeit der Funktionsweise sowohl der Temperaturwiderstandsschicht 6 als auch der Heizwiderstandsschicht 4 überprüft wird. Weiterhin kann bei Ausfall der Temperaturwiderstandsschicht 6 die Heizwiderstandsschicht 4 als Temperatursensor verwendet werden, wobei in diesem Fall kein Selbsttest mehr möglich ist.

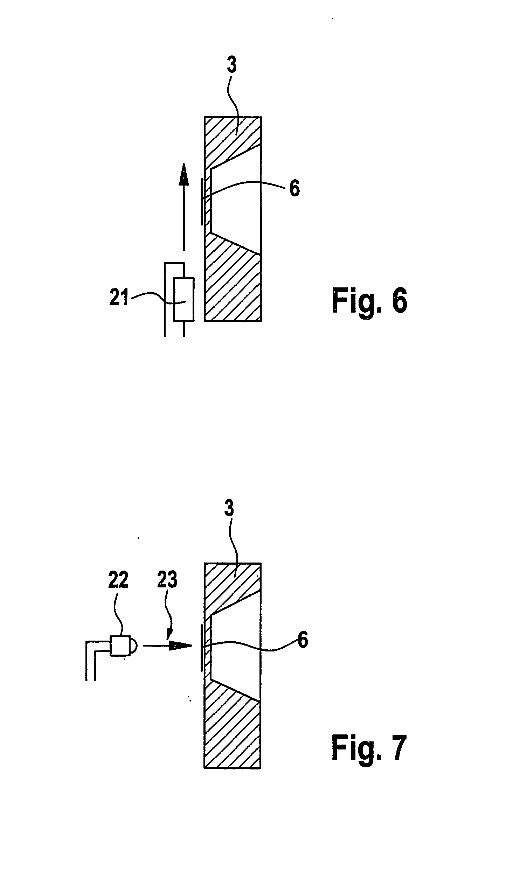

Gemäß Fig. 6 ist ein Heizwiderstand 21 mit einem nicht gezeigten Heizgenerator verbunden und außerhalb des Substrates 3 in dem Luftvolumen des Türinnenraums vorgesehen. Die Anordnung des Heizwiderstands 21 erfolgt derartig, daß die von ihm erwärmte Luft an dem Temperatursensor 6 entlanggleitet, was insbesondere durch eine Anordnung unterhalb und in seitlicher Nähe zu dem Temperatursensor 6 erreicht werden kann. Diese Ausführungsform hat den Vorteil, daß durch den als Heizeinrichtung dienenden externen Heizwiderstand 21 eine Temperaturerhöhung der Luft des Luftvolumens erreicht wird, wie sie auch im Falle eines Seitenaufpralls zu messen ist. Falls der Temperatursensor 6 durch Verschmutzung oder einen Belag die Temperaturänderung nicht oder nur abgeschwächt bzw. mit zeitlicher Verzögerung wahrnimmt, kann dies in dem Selbsttest direkt erkannt werden.

Bei der Ausführungsform der Fig. 7 wird die Wärme über Wärmestrahlung dem Temperatursensor 6 zugeführt, indem von einer Infrarot-Leuchtdiode (IR-LED) 22 Infrarot-Strahlung direkt über einen Zwischenraum 23 in dem Luftvolumen des Türinnenraums auf den Temperatursensor 6 gestrahlt wird. Auch bei dieser Ausführungsform werden Verschmutzungen oder ein Belag des Temperatursensors 6 durch die Abschirmung der Wärmestrahlung als Abschwächung oder zeitliche Verzögerung des Meßsignals erfaßt.

## Patentansprüche

1. Vorrichtung zum Erkennen eines Seitenaufpralls an einem Kraftfahrzeug, mit
einem in einem abgeschlossenen Luftvolumen eines Türinnenraums vorgesehenen Temperatursensor (6),
einer in dem abgeschlossenen Luftvolumen vorgesehenen Heizeinrichtung (4, 14, 21, 22), und
einer Meßeinrichtung (15) zur Aufnahme und Konditionierung eines Meßsignals des Temperatursensors (6) und Ausgabe eines Temperatursignals,
einem Heizgenerator (17) zum Ansteuern der Heizeinrichtung (4) , und
einer Auswerte- und Steuereinrichtung (16) zur Aufnahme des Temperatursignals der Meßeinrichtung (15) und Ansteuerung des Heizgenerators (17).

2. Vorrichtung nach Anspruch 1, **dadurch gekennzeichnet, daß** der Temperatursensor (6) als zu dem Luftvolumen hin freiliegende, mäanderartige Temperaturwiderstandsschicht (6) aus einem Material mit temperaturabhängigem Widerstand, vorzugsweise einem Metall oder Halbleiter, ausgebildet ist.

3. Vorrichtung nach Anspruch 1 oder 2, **dadurch gekennzeichnet, daß** der Temperatursensor (6) auf einer vorzugsweise als dünner Bereich eines Substrates (3) ausgebildeten Membran (2) vorgesehen ist.

4. Vorrichtung nach Anspruch 3, **dadurch gekennzeichnet, daß** die Heizeinrichtung als vorzugsweise mäanderartige Heizwiderstandsschicht (4, 14) auf dem Substrat (3) vorgesehen ist.

5. Vorrichtung nach Anspruch 4, **dadurch gekennzeichnet, daß** die Heizwiderstandsschicht (4) auf der Membran (2) ausgebildet ist.

6. Vorrichtung nach Anspruch 5, **dadurch gekennzeichnet, daß** die Temperaturwiderstandsschicht (6) und die Heizwiderstandsschicht (4) auf der Membran (2) parallel und mäanderartig ineinandergeschachtelt aufgetragen sind.

7. Vorrichtung nach Anspruch 6, **dadurch gekennzeichnet, daß** eine Schalteinrichtung (20) zum Schalten zwischen zwei Schaltzuständen vorgesehen ist, wobei in einem ersten Schaltzustand die Temperaturwiderstandsschicht (6) mit der Meßeinrichtung (15) und die Heizwiderstandsschicht (4) mit dem Heizgenerator (17) verbunden ist und in einem zweiten Schaltzustand die Temperaturwiderstandsschicht (6) mit dem Heizgenerator (17) und die Heizwiderstandsschicht (4) mit der Meßeinrichtung (15) verbunden ist.

8. Vorrichtung nach einem der Ansprüche 4 bis 7, **dadurch gekennzeichnet, daß** die Temperaturwiderstandsschicht (6) und die Heizwiderstandsschicht (4, 14) über auf dem Substrat (3) vorgesehene Anschlußkontakte (10, 11, 12, 13) mit der Meßeinrichtung (15) und dem Heizgenerator (17) verbunden sind.

9. Vorrichtung nach einem der Ansprüche 1 bis 3, **dadurch gekennzeichnet, daß** die Heizeinrichtung als außerhalb des Substrates (3) und vorzugsweise unterhalb des Temperatursensors (6) angeordnete Konvektions-Heizeinrichtung (21) ausgebildet ist.

10. Vorrichtung nach einem der Ansprüche 1 bis 3, **dadurch gekennzeichnet, daß** die Heizeinrichtung als Wärmestrahlungs-Heizeinrichtung (22), vorzugsweise als Infrarot-Leuchtdiode, ausgebildet und über einen Zwischenraum (23) in dem Luftvolumen von dem Temperatursensor (6) getrennt vorgesehen ist.

11. Verfahren zum Erkennen eines Seitenaufpralls an einem Fahrzeug, bei dem
in einem abgeschlossenen Luftvolumen eines Türinnenraums eine Temperatur mittels eines Temperatursensors (6) gemessen wird und auf Grundlage der gemessenen Temperatur entschieden wird, ob ein Seitenaufprall vorliegt,
wobei zumindest zeitweise ein Funktionstest durchgeführt wird, bei dem das Luftvolumen und/oder der Temperatursensor (6) erhitzt wird und aus einem Meßsignal des Temperatursensors entschieden wird, ob der Temperatursensor (6) funktionsfähig ist.

12. Verfahren nach Anspruch 11, **dadurch gekennzeichnet, daß** in dem Funktionstest eine Höhe und/oder eine Steilheit und/oder eine zeitliche Verzögerung des Messsignals ausgewertet wird.

13. Verfahren nach Anspruch 11 oder 12, **dadurch gekennzeichnet, daß** bei dem Funktionstest zumindest zeitweise umgeschaltet wird zwischen einem ersten Schaltzustand, bei dem die Temperatur über den Temperatursensor (6) gemessen und Wärmeenergie über eine Heizeinrichtung (4) zugeführt wird, und einem zweiten Schaltzustand, bei dem die Temperatur über die Heizeinrichtung (4) gemessen und Wärmeenergie über den Temperatursensor (6) zugeführt wird.

14. Verfahren nach einem der Ansprüche 11 bis 13, **dadurch gekennzeichnet, daß** die Wärmeenergie zumindest zeitweise pulsartig zugeführt wird und aus einem gemessenen Temperaturanstiegsverhalten ermittelt wird, ob der Temperatursensor (6) zumindest stellenweise bedeckt ist.

## Claims

1. Apparatus for detecting a side impact on a motor vehicle, having
a temperature sensor (6) which is provided in a sealed volume of air in the interior of a door,
a heating device (4, 14, 21, 22) which is provided in the sealed volume of air, and
a measuring device (15) for receiving and conditioning a measurement signal of the temperature sensor (6) and transmitting a temperature signal,
a heat generator (17) for actuating the heating device (4), and
an evaluation and control device (16) for receiving the temperature signal from the measuring device (15) and actuating the heat generator (17).

2. Apparatus according to Claim 1, **characterized in that** the temperature sensor (6) is in the form of a meandering temperature resistance layer (6) which is exposed to the volume of air and is composed of a material with a temperature-dependent resistance, preferably a metal or semiconductor.

3. Apparatus according to Claim 1 or 2, **characterized in that** the temperature sensor (6) is provided on a diaphragm (2) which is preferably in the form of a thin region of a substrate (3).

4. Apparatus according to claim 3, **characterized in that** the heating device in the form of a preferably meandering heating resistance layer (4, 14) is provided on the substrate (3).

5. Apparatus according to Claim 4, **characterized in that** the heating resistance layer (4) is formed on the diaphragm (2) .

6. Apparatus according to Claim 5, **characterized in that** the temperature resistance layer (6) and the heating resistance layer (4) are applied on the diaphragm (2) such that they are parallel and interleaved in a meandering manner.

7. Apparatus according to Claim 6, **characterized in that** a switching device (20) for switching between two switching states is provided, with the temperature resistance layer (6) being connected to the measuring device (15) and the heating resistance layer (4) being connected to the heat generator (17) in a first switching state, and the temperature resistance layer (6) being connected to the heat generator (17) and the heating resistance layer (4) being connected to the measuring device (15) in a second switching state.

8. Apparatus according to one of Claims 4 to 7, **characterized in that** the temperature resistance layer (6) and the heating resistance layer (4, 14) are connected to the measuring device (15) and to the heat generator (17) by means of connection contacts (10, 11, 12, 13) which are provided on the substrate (3).

9. Apparatus according to one of Claims 1 to 3, **characterized in that** the heating device is in the form of a convection heating device (21) which is arranged outside the substrate (3) and preferably below the temperature sensor (6).

10. Apparatus according to one of Claims 1 to 3, **characterized in that** the heating device is in the form of a heat-radiating heating device (22), preferably an infrared light-emitting diode, and is provided such that it is separated from the temperature sensor (6) by means of an intermediate space (23) in the volume of air.

11. Method for detecting a side impact on a vehicle, in which
a temperature is measured by means of a temperature sensor (6) in a sealed volume of air in the interior of a door, and on the basis of the measured temperature a decision is made as to whether a side impact has occurred,
with a functional test being carried out at least temporarily, in which functional test the volume of air and/or the temperature sensor (6) is/are heated up and a measurement signal from the temperature sensor is used to decide whether the temperature sensor (6) is able to operate.

12. Method according to Claim 11, **characterized in that** a height and/or a gradient and/or a time delay of the measurement signal is/are evaluated in the functional test.

13. Method according to Claim 11 or 12, **characterized in that**, in the functional test, a changeover is made at least temporarily between a first switching state, in which the temperature is measured by means of the temperature sensor (6) and thermal energy is supplied by means of a heating device (4), and a second switching state, in which the temperature is measured by means of the heating device (4) and thermal energy is supplied by means of the temperature sensor (6).

14. Method according to one of Claims 11 to 13, **characterized in that** the thermal energy is supplied at least temporarily in a pulsed manner and a measured temperature increase characteristic is used to determine whether the temperature sensor (6) is covered at least in some locations.

## Revendications

1. Dispositif de détection d'un impact latéral sur un véhicule, comprenant un capteur de température (6) prévu dans un volume d'air fermé d'un espace intérieur de portière, un dispositif de chauffage (4, 14, 21, 22) prévu dans le volume d'air fermé, et un dispositif de mesure (15) pour recevoir et conditionner un signal de mesure provenant du capteur de température (6) et pour émettre un signal de température, un générateur de chauffage (17) pour commander le dispositif de chauffage (4), et un dispositif d'exploitation et de commande (16) pour recevoir le signal de température provenant du dispositif de mesure (15) et pour commander le générateur de chauffage (17).

2. Dispositif selon la revendication 1,
**caractérisé en ce que**
le capteur de température (6) est une couche thermo-résistante (6) en forme de méandre libre vers le volume d'air, constituée d'un matériau ayant une résistance dépendante de la température, de préférence un métal ou un semi-conducteur.

3. Dispositif selon la revendication 1 ou 2,
**caractérisé en ce que**
le capteur de température (6) est prévu sur une membrane (2) de préférence sous forme d'une zone mince d'un substrat (3).

4. Dispositif selon la revendication 3,
**caractérisé en ce que**
le dispositif de chauffage est prévu en tant que couche de résistance de chauffage (4, 14) de préférence en forme de méandre sur le substrat (3).

5. Dispositif selon la revendication 4,
**caractérisé en ce que**
la couche de résistance de chauffage (4) est formée sur la membrane (2).

6. Dispositif selon la revendication 5,
**caractérisé en ce que**
la couche thermo-résistante (6) et la couche de résistance de chauffage (4) sont appliquées sur la membrane (2) de manière emboîtée parallèlement et en forme de méandre.

7. Dispositif selon la revendication 6,
**caractérisé en ce qu'**
un dispositif de commutation (20) est prévu pour commuter entre deux états de commutation, la couche thermo-résistante (6) étant reliée, dans un premier état de commutation, au dispositif de mesure (15) tandis que la couche de résistance de chauffage (4) est reliée au générateur de chauffage (17), alors que, dans un deuxième état de commutation, la couche thermo-résistante (6) est reliée au générateur de chauffage (17) et la couche de résistance de chauffage (4) est reliée au dispositif de mesure (15).

8. Dispositif selon l'une des revendications 4 à 7,
**caractérisé en ce que**
la couche thermo-résistante (6) et la couche de résistance de chauffage (4, 14) sont reliées au dispositif de mesure (15) et au générateur de chauffage (17) par le biais de contacts de connexion (10, 11, 12, 13) prévus sur le substrat (3).

9. Dispositif selon l'une des revendications 1 à 3,
**caractérisé en ce que**
le dispositif de chauffage est un dispositif de chauffage par convection (21) disposé à l'extérieur du substrat (3) et de préférence au-dessous du capteur de température (6).

10. Dispositif selon l'une des revendications 1 à 3,
**caractérisé en ce que**
le dispositif de chauffage est un dispositif de chauffage à rayonnement thermique (22), de préférence sous forme de diode lumineuse à infrarouge, et est séparé du capteur de température (6) par un espace intermédiaire (23), dans le volume d'air.

11. Procédé de détection d'un impact latéral sur un véhicule, selon lequel dans un volume d'air fermé d'un espace intérieur de portière, on mesure une température au moyen d'un capteur de température (6) et sur la base de la température mesurée, on décide si l'on est en présence d'un impact latéral, un test de fonctionnement étant réalisé au moins temporairement, au cours duquel le volume d'air et/ou le capteur de température (6) est chauffé et on décide à partir d'un signal de mesure provenant du capteur de température si le capteur de température (6) est fonctionnel.

12. Procédé selon la revendication 11,
**caractérisé en ce que**
le test de fonctionnement permet d'évaluer une hauteur, une pente et/ou un décalage temporel du signal de mesure.

13. Procédé selon la revendication 11 ou 12,
**caractérisé en ce qu'**
au cours du test de fonctionnement, on passe au moins temporairement d'un premier état de commutation, dans lequel la température est mesurée via le capteur de température (6) et de l'énergie thermique est amenée via un dispositif de chauffage (4), à un deuxième état de commutation, dans lequel la température est mesurée par le biais du dispositif de chauffage (4) et de l'énergie thermique est amenée par le biais du capteur de température (6).

14. Procédé selon l'une des revendications 11 à 13,
**caractérisé en ce que**
l'énergie thermique est amenée au moins temporairement de manière pulsée et on détermine à partir d'un comportement d'augmentation de la température si le capteur de température (6) est recouvert au moins par endroits.
